# EUROPEAN PATENT SPECIFICATION

(11) **EP 2 889 727 B1**
(45) Date of publication and mention of the grant of the patent: **05.09.2018**
(21) Application number: 14200687.3
(22) Date of filing: 30.12.2014
(51) Int. Cl.: G06F 3/01, G06F 3/0488, G06F 3/0354

(54) **Friction augmented controls and method to convert buttons of touch control panels to friction augmented controls**
Reibungserweiterte Steuerungen und Verfahren zur Umwandlung von Schaltflächen von Berührungssteuerungstafeln in Reibungserweiterte Steuerungen
Commandes augmentées par friction et procédé pour convertir des boutons de panneaux de commande tactile en commandes augmentées par friction

(30) Priority: 31.12.2013 US 201361922642 P
(43) Date of publication of application: 01.07.2015
(73) Proprietor: Immersion Corporation, San Jose CA 95134 (US)
(72) Inventor: Levesque, Vincent, Montreal, Québec H2J 2R1 (CA); Olien, Neil, Montreal, Québec H4B 2V3 (CA); Ullrich, Christopher J., Ventura, CA California (US); Birnbaum, David M., Oakland, CA California 94607 (US); Weddle, Amaya Becvar, San Jose, CA California 95125 (US)
(74) Representative: Beck Greener

(56) References cited:
- EP-A2- 1 965 291
- EP-A2- 2 381 340
- EP-A2- 2 573 667
- WO-A1-2010/105001
- US-A1- 2008 024 459
- US-A1- 2011 009 195
- US-A1- 2012 268 412
- US-A1- 2012 327 006
- US-A1- 2013 332 892

## Description

The present invention is related to friction augmented controls and a method to convert buttons of touch control panels to friction augmented controls.

Physical buttons and controls are increasingly being replaced by touch panels in many consumer electronic products and home appliances, automotive interfaces and specialized equipment, such as medical equipment monitors and industrial control panels. These touch panels detect touch inputs using pressure or capacitive sensing, and present several advantages over their physical counterparts in terms of cost, durability, ease of cleaning, resistance to dust and water, style, etc. Sterilizing medical equipment, for example, may be easier to do with a flat panel that presents no gaps and grooves. Similarly, industrial equipment is often used in environments in which dirt particles can easily make their way into physical controls, and in which these controls must be able to withstand the occasional impact of a tool. In some cases, touch panels are also sufficiently thin to be installed on surfaces without creating holes, which may be a design consideration in some applications, such as an interior of a vehicle.

Unlike physical buttons and controls, touch panels typically present a flat surface without tactile features. The lack of tactile feedback on these flat panels has a negative impact on their usability and may limit the types of controls that can be used, which may prevent the use of touch panels in certain applications. A window control for an automotive interface, for example, cannot use capacitive buttons due to safety regulations that guard against accidental activation.

It is desirable to convert the controls of commonly used touch panels to be more usable and more pleasant to the users of the touch panels.

US 2012/268412 relates to a system for generating a haptic effect with an electrostatic device, either alone or in combination with other devices to generate a haptic effect. WO 2010/105001 relates to a touch-enabled device which is operable to simulate one or more features in a touch area. The features may comprise a change in texture or simulation of boundaries, obstacles or other discontinuities in the touch surface.

US 2008/0024459 discloses a display section with a touch screen adapted to display GUI objects having a plurality of logical states and provides haptic feedback depending upon the logical state.

According to a first aspect of the invention, there is provided a system comprising: a touch control panel configured to receive an input corresponding to an augmented virtual control button displayed on a display, the augmented virtual control button being converted from a virtual control button comprising a control function, wherein the augmented virtual control button retains the control function of the virtual control button; a controller in signal communication with the touch control panel and configured to control at least one operational setting of a powered apparatus; and a haptic output device in signal communication with the controller and configured to output a friction effect indicating a state of at least one of the augmented virtual control button as the user provides the input corresponding to the augmented virtual control button, wherein the apparatus includes a conducting layer having at least one electrode and an insulating layer, and the thickness of the insulating layer varies to break an electrostatic friction effect at certain locations whilst maintaining an active electrostatic friction layer at the location of the virtual button .

In an embodiment, the haptic output device comprises a piezoelectric actuator connected to a surface of the touch control panel. In an embodiment, the haptic output device comprises a flexible layer connected to the surface of the touch control panel and coinciding with the input button, the piezoelectric actuator being embedded in the flexible layer, and a rigid frame having an opening coinciding with the input button overlays the flexible layer.

In an embodiment, the powered apparatus is a kitchen appliance. In an embodiment, the powered apparatus is a light fixture. In an embodiment, the powered apparatus is medical equipment. In an embodiment, the powered apparatus is an industrial machine. In an embodiment, the powered apparatus is a smartphone. In an embodiment, the powered apparatus is located in a vehicle. In an embodiment, the powered apparatus is a computer monitor.

According to an aspect of the invention, there is provided a method for converting a control button to an augmented control button. The method includes identifying at least one feature of the control button to be converted to the augmented control button; assigning a friction effect for each feature identified; and programming a haptic output device to provide the assigned friction effect for playback on a touch control panel.

According to a second aspect of the present invention, there is provided a method for converting a virtual control button to an augmented virtual control button the method comprising: identifying a feature of the virtual control button to be converted to the augmented virtual control button to be simulated as a physical surface feature; identifying a control function of the virtual control button to be retained by the augmented virtual control button; assigning a first friction effect to the feature in the virtual augmented control button; and outputting, by a haptic output device, the friction effect for playback on a touch control panel, the friction effect indicating a state of the augmented virtual control button as the user provides an input corresponding to the augmented virtual control button, wherein the touch control panel comprises a conducting layer having at least one electrode and an insulating layer, and that the thickness of the insulating layer varies to break an electrostatic friction effect at certain locations whilst maintaining an active electrostatic friction layer at the location of the virtual button.

In an embodiment, the at least one feature includes an edge of the control button. In an embodiment, the at least one feature includes a texture of the control button.

These and other aspects, features, and characteristics of the present invention, as well as the methods of operation and functions of the related elements of structure and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

The components of the following Figures are illustrated to emphasize the general principles of the present disclosure and are not necessarily drawn to scale. Reference characters designating corresponding components are repeated as necessary throughout the Figures for the sake of consistency and clarity.

Embodiments of the present invention will now be described in detail with reference to the accompanying drawings, in which:
Figure 1 schematically illustrates a system in accordance with embodiments of the invention;
Figure 2 schematically illustrates an embodiment of a processor of the system of Figure 1;
Figure 3 schematically illustrates a user interacting with a surface of the system of Figure 1;
Figure 4 schematically illustrates the system of Figure 3 simulating an edge on the surface;
Figure 5 schematically illustrates the system of Figure 3 altering a haptic effect generated at regions simulated on the surface;
Figure 6 is flow chart of a method according to an embodiment of the invention;
Figures 7A and 7B schematically illustrate a conversion of a button of a touch control panel to an augmented button with edges and texture;
Figures 8A and 8B schematically illustrate a conversion of a multi-purpose button of a touch control panel to an augmented multi-purpose button with texture;
Figures 9A and 9B schematically illustrate a conversion of a toggle button or a pair of buttons of a touch control panel to an augmented toggle switch with transition effects and textures;
Figures 10A and 10B schematically illustrate a conversion of a collection of buttons of a touch control panel to an augmented directional button with friction feedback based on directional gestures;
Figures 11A-11C schematically illustrate a conversion of incremental buttons of a touch control panel to an augmented radial or augmented linear continuous control with detents and boundary effects;
Figures 12A and 12B schematically illustrate a conversion of arrow buttons of a touch control panel to a joystick-like control with gestural feedback;
Figure 13 schematically illustrates an entire touch control panel covered with an electrostatic friction layer;
Figure 14 schematically illustrates a touch control panel that is partially covered with an electrostatic friction layer;
Figure 15 schematically illustrates a touch control panel that is partially covered with an electrostatic friction layer with certain areas providing independent haptic feedback;
Figure 16 schematically illustrates a touch control panel that is configured to be entirely actuated with actuators that produce ultrasonic vibrations;
Figure 17 schematically illustrates a touch control panel that is configured to be partially actuated with actuators that produce ultrasonic vibrations;
Figure 18 schematically illustrates a touch control panel that is configured so that each button and control area is individually actuated with actuators that produce ultrasonic vibrations;
Figure 19 schematically illustrates an embodiment of the invention implemented in a flat touch control panel of a stove;
Figure 20 schematically illustrates an embodiment of the invention implemented in a touch control panel in a vehicle;
Figure 21 schematically illustrates an embodiment of the invention implemented in a dimmer switch for a light fixture;
Figure 22 schematically illustrates an embodiment of the invention implemented in a computer monitor;
Figures 23 and 24 schematically illustrate embodiments of the invention implemented in a smartphone;
Figure 25 schematically illustrates an embodiment of the invention implemented in a touch control monitor of medical equipment; and
Figure 26 schematically illustrates an embodiment of the invention implemented in a touch control panel for an industrial machine.

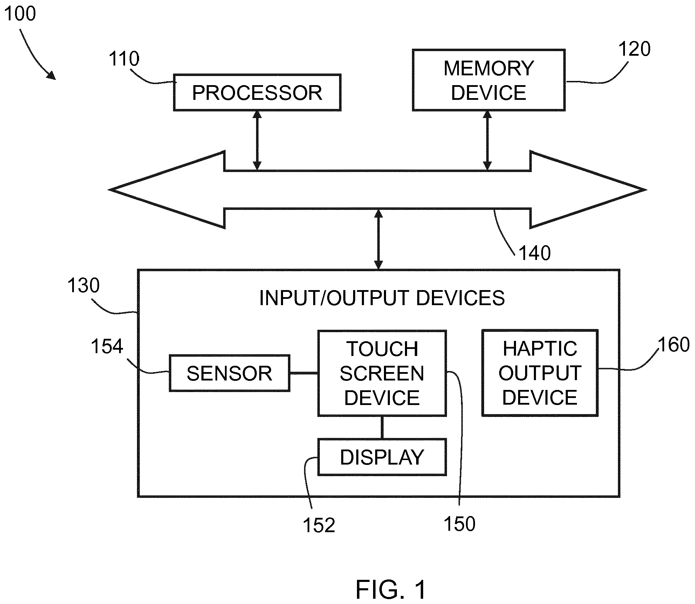

Figure 1 is a schematic illustration of a system 100 in accordance with an embodiment of the invention. As illustrated, the system 100 includes a processor 110, a memory device 120, and input/output devices 130, which are interconnected via a bus 140. In an embodiment, the input/output devices 130 may include a touch screen device 150, a haptic output device 160 and/or other input devices that receive input from a user of the system 100 and output devices that output information to the user of the system 100. In an embodiment, the system 100 may be a user interface in the form of a touch control panel that includes all of the components illustrated in Figure 1 in a single integrated device.

The touch screen device 150 may be configured as any suitable user interface or touch/contact surface assembly and may be configured for physical interaction with a user-controlled device, such as a stylus, finger, etc. In some embodiments, the touch screen device 150 may include at least one output device and at least one input device. For example, the touch screen device 150 may include a visual display 152 configured to display, for example, images and a touch sensitive screen comprising at least one sensor 154 superimposed thereon to receive inputs from a user's finger or stylus controlled by the user. The visual display 152 may include a high definition display screen.

In various embodiments, the haptic output device 160 is configured to provide haptic feedback to the user of the system 100 while the user is in contact with a least a portion of the system 100. For example, the haptic output device 160 may provide haptic feedback to the touch screen device 150 itself to impose a haptic effect when the user is in contact with the touch screen device 150 and/or to another part of the system 100, such as a housing containing at least the input/output devices 130. As discussed in further detail below, the haptic effects may be used to enhance the user experience when interacting with the system 100.

The haptic feedback provided by the haptic output device 160 may be created with any of the methods of creating haptic effects, such as vibration, deformation, kinesthetic sensations, electrostatic or ultrasonic friction, etc. In an embodiment, the haptic output device 160 may include non-mechanical or non-vibratory devices such as those that use electrostatic friction (ESF), ultrasonic friction (USF), or those that induce acoustic radiation pressure with an ultrasonic haptic transducer, or those that use a haptic substrate and a flexible or deformable surface, or those that provide thermal effects, or those that provide projected haptic output such as a puff of air using an air jet, and so on. The haptic output device 160 may include an actuator, for example, an electromagnetic actuator such as an Eccentric Rotating Mass ("ERM") in which an eccentric mass is moved by a motor, a Linear Resonant Actuator ("LRA") in which a mass attached to a spring is driven back and forth, or a "smart material" such as piezoelectric materials, electro-active polymers or shape memory alloys, a macro-composite fiber actuator, an electro-static actuator, an electro-tactile actuator, and/or another type of actuator that provides a physical feedback such as vibrotactile feedback. Multiple haptic output devices 160 may be used to generate different haptic effects, as discussed in further detail below.

The processor 110 may be a general-purpose or specific-purpose processor or microcontroller for managing or controlling the operations and functions of the system 100. For example, the processor 110 may be specifically designed as an application-specific integrated circuit ("ASIC") to control output signals to the haptic output device 160 to provide haptic effects. The processor 110 may be configured to decide, based on predefined factors, what haptic effects are to be generated based on a haptic signal received or determined by the processor 110, the order in which the haptic effects are generated, and the magnitude, frequency, duration, and/or other parameters of the haptic effects. The processor 110 may also be configured to provide streaming commands that can be used to drive the haptic output device 160 for providing a particular haptic effect. In some embodiments, the processor 110 may actually include a plurality of processors, each configured to perform certain functions within the system 100. The processor 110 is described in further detail below.

The memory device 120 may include one or more internally fixed storage units, removable storage units, and/or remotely accessible storage units. The various storage units may include any combination of volatile memory and non-volatile memory. The storage units may be configured to store any combination of information, data, instructions, software code, etc. More particularly, the storage units may include haptic effect profiles, instructions for how the haptic output device 160 is to be driven, or other information for generating haptic effects.

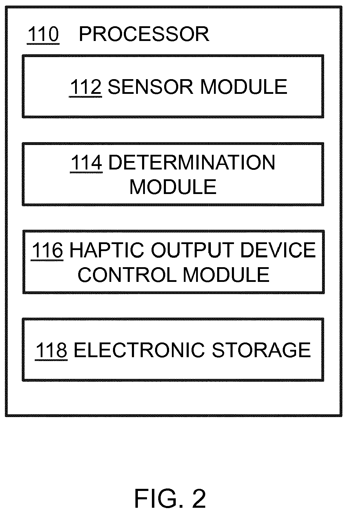

Figure 2 illustrates an example of the processor 110 in more detail. The processor 110 may be configured to execute one or more computer program modules. The one or more computer program modules may include one or more of a sensor module 112, a determination module 114, a haptic output device control module 116, and/or other modules. The processor 110 may also include electronic storage 118, which may be the same as the memory device 120 or in addition to the memory device 120. The processor 110 may be configured to execute the modules 112, 114, and/or 116 by software, hardware, firmware, some combination of software, hardware, and/or firmware, and/or other mechanisms for configuring processing capabilities on processor 110.

It should be appreciated that although modules 112, 114, and 116 are illustrated in Figure 2 as being co-located within a single processing unit, in embodiments in which the processor 110 includes multiple processing units, one or more of modules 112, 114, and/or 116 may be located remotely from the other modules. The description of the functionality provided by the different modules 112, 114, and/or 116 described below is for illustrative purposes, and is not intended to be limiting, as any of the modules 112, 114, and/or 116 may provide more or less functionality than is described. For example, one or more of the modules 112, 114, and/or 116 may be eliminated, and some or all of its functionality may be provided by other ones of the modules 112, 114, and/or 116. As another example, the processor 110 may be configured to execute one or more additional modules that may perform some or all of the functionality attributed below to one of the modules 112, 114, and/or 116.

The sensor module 112 is configured to receive an input signal from the sensor 154 that is generated when the sensor 154 detects an input from a user of the system 100. In embodiments in which there are multiple sensors, the sensor module 112 is configured to receive and process input signals from the multiple sensors. The sensor module 112 may be configured to determine whether the sensed input is an intentional input or merely an inadvertent touch to the touch screen device 150 by comparing the strength of the input signal to a predetermined threshold strength that corresponds to an intentional input. The sensor module 112 is also configured to send a signal to the determination module 114 for further processing.

The determination module 114 is configured to determine what was intended by the user when providing an input to the sensor 154. For example, the user may touch a certain location of the touch screen 150 or provide a particular gesture to the touch screen device 150 that indicates that a certain function is to be performed by the system 100. The determination module 114 may be programmed with a library of predetermined gestures and touch locations on the touch screen device 150 so that when the user touches a particular location on the touch screen device 150 or provides a gesture to the touch screen device 150, the determination module 114 may determine a corresponding output. In addition, the determination module 114 may also output a signal to the haptic output device control module 116 so that a haptic effect in accordance with embodiments of the invention described below may be provided to the user.

The haptic output device control module 116 is configured to receive the output signal from the determination module 114 and determine the haptic effect to be generated by the haptic output device 160, based on the signal generated by the determination module 114. Determining the haptic effect may include determining the type of haptic effect and one or more parameters of the haptic effect, such as amplitude, frequency, duration, etc., of the haptic effect that will augment a control button, as discussed in further detail below. In an embodiment, the touch screen device 150 includes a display surface, which may be rigid and configured to modulate its friction properties through, including but not limited to, electrostatic friction and ultra-sonic surface vibration, generated by a haptic output device 160, to give the user a feeling of surface relief (e.g., hills and valleys) when running a finger or stylus across the surface of the system 100, as described in further detail below.

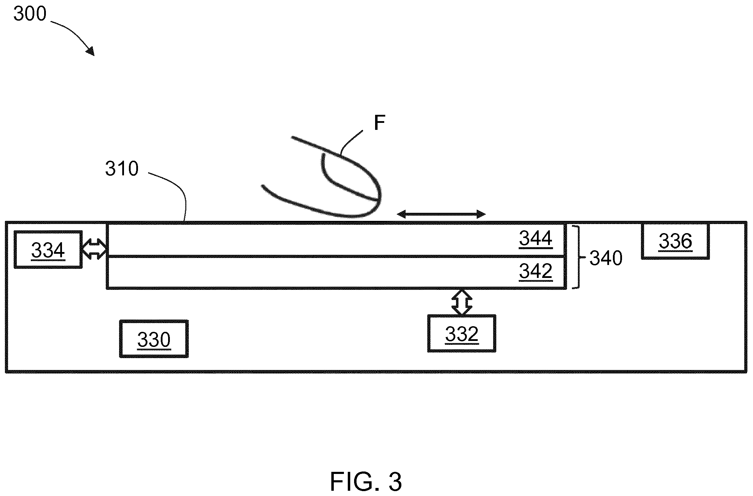

Figure 3 illustrates an embodiment of the system 100 of Figure 1 in the form of a touch control panel 300 that provides a haptic effect to a user of the system 100 at the surface 310 of the touch control panel 300. The haptic effect may be outputted to provide feedback to a user or object, such as a stylus, in sliding interaction with the surface 310. The haptic effect may provide the feedback with electrostatic interactions, either to generate a force on an object, like a finger F of the user's hand at the surface 310, or to send an electric signal to an object that can perceive the signal, like a nerve of the finger F. In examples, the haptic effect may provide the feedback with ultrasonic vibrations.

The user interfaces with the system 100 through the surface 310 that is configured to sense an object that is touching the surface 310. The object may be the user's finger F, or any other part of the user's body that can sense a haptic effect. The object may also be a stylus or some other device whose presence can be sensed by the sensor 154 described above. The touch control panel 300 may sense the presence of the object through, for example, capacitive, resistive, or inductive coupling.

The touch control panel 300 may provide haptic effects at the surface 310 through one or more haptic output devices in the form of actuators 330, 332, 334, an electrostatic device 340, or through combinations thereof. The actuators 330, 332, and 334 are configured to generate mechanical motion that may translate into a haptic effect at the surface 310. The actuators 330, 332, 334 may be implemented as piezoelectric actuators, voice coils, magnetic actuators such as solenoids, pneumatic actuators, ultrasonic energy actuators, an eccentric mass actuator, an electroactive polymer actuator, a shape memory alloy, or some other type of actuator, as described above. The actuators 330, 332, 334 may rely on motors that convert torque into vibrations, on fluid pressure, on changes in the shape of a material, or on other forces that generate motion. Further, the actuators 330, 332, 334 are not limited to generating vibrations, but may instead generate lateral motion, up and down motion, rotational motion, or some combinations thereof, or some other motion.

In an example, the actuator 330 may be a piezoelectric or a voice coil actuator that generates vibrations to generate a haptic effect, the actuator 332 may be a solenoid that generates up and down motion to generate a haptic effect, and the actuator 334 may be a pneumatic actuator that generates lateral motion to generate a haptic effect. The actuators 330, 332, 334 may all be activated when a particular haptic effect to be provided to the user is desired, or only one may be activated to conserve power or to generate a different haptic effect or effects. A particular actuator may be positioned and configured to generate a haptic effect for the entire surface 310, or for only a portion of the surface 310, as described in further detail below.

The electrostatic device 340 according to an embodiment of the present invention is an electrovibrotactile or friction display or any other device that applies voltages and currents instead of mechanical motion to generate a haptic effect. The electrostatic device 340 in this embodiment has at least a conducting layer 342 having at least one electrode, and an insulating layer 344. The conducting layer 342 may include any semiconductor or other conductive material, such as copper, aluminum, gold, or silver. The insulating layer 344 may be glass, plastic, polymer, or any other insulating material. In an embodiment, the sensor 154 described above may be provided in the conducting layer 342 or the insulating layer 344. In an example, the electrostatic device 340 may not have an insulating layer, so that an object can directly touch the conducting layer 342. A haptic effect may be generated by passing an electrical current from the conducting layer 342 to the object at or near the surface 310. In an embodiment, the insulating layer 344 may include one or more electrodes that can pass current to objects that touch the electrodes as the objects move across the insulating layer 344.

The touch control panel 300 may operate the electrostatic device 340 by applying an electric signal to the conducting layer 342. The electric signal may be an AC signal that capacitively couples the conducting layer 342 with an object near or touching the surface 310. The AC signal may be generated by a high-voltage amplifier. The touch control panel 300 may also rely on principles other than capacitive coupling to generate the haptic effect. For example, in an example, an ultrasonic vibration device 336 may be used to generate ultrasonic friction effects that may be felt by the user's finger F at the surface 310. The ultrasonic vibration device 336 may be connected to the surface 310 or create part of the surface 310 and may include a plurality of piezoelectric actuators that are configured to generate ultrasonic vibrations.

The capacitive coupling may control a level of friction and simulate a coefficient of friction or texture on the surface 310 to provide the haptic effect. A coefficient of friction is a simulated one in that while the surface 310 can be smooth, the capacitive coupling may produce an attractive force between an object near the surface 310 and the conducting layer 342. Increasing the attractive force may increase a level of friction at the surface 310 even when the structure of the material at the surface 310 has not changed. Varying the levels of attraction between the object and the conducting layer 342 can vary the friction on an object moving across the surface 310. Varying the friction force simulates a change in the coefficient of friction. Controlling friction through a haptic effect is discussed in more detail in U.S. Patent Application Serial No. 13/092,269, titled "Electro-vibrotactile Display," filed April 22, 2011, and published on October 25, 2012 as United States Patent Application Publication No. 2012/0268412. The simulated coefficient of friction may be changed by the actuators 330, 332, 334 as well. For example, the actuators 330, 332, 334 may increase the friction force by generating vibrations, or by changing the surface relief of the surface 310 to change the actual coefficient of friction.

The capacitive coupling may also generate the haptic effect by stimulating parts of the object near or touching the surface 310, such as mechanoreceptors in the skin of a user's finger F, or components in a stylus that can respond to the coupling. The mechanoreceptors in the skin, for example, may be stimulated and sense the capacitive coupling as a vibration or some more specific sensation. For example, the conducting layer 342 can be applied with an AC voltage signal that couples with conductive parts of a user's finger F. As the user moves his or her finger F on the surface 310, the user may sense a texture of prickliness, graininess, bumpiness, roughness, stickiness, or some other texture.

In an embodiment, the haptic effect may be generated to simulate a feature, such as a surface feature. For example, the simulated surface feature may be a spatial pattern, edge or border, or any other tactile sensation, whether natural or artificial, at the surface 310. The spatial pattern may include a grid of straight lines, a grid of concentric circles, a grid of points, a grid of tiles, any combination thereof, or any other spatial pattern that conveys information relevant to the augmented control button. Varying the levels of attraction between the object and the conducting layer 342 can vary the friction on an object moving across the surface 310. A region having a different level of friction than surrounding regions may represent a spatial pattern component, a texture, or any other surface feature. Simulating surface features is discussed in more detail in U.S. Patent Application Serial No. 13/665,526, titled "Method and Apparatus for Simulating Surface Features on a User Interface with Haptic Effects," filed October 31, 2012, and published as United States Patent Application Publication No. 2014/0118127.

To provide the same attractive force or to provide the same level of stimuli across many different objects or persons, the touch control panel 300 may also include a sensor that can measure the impedance at the surface 310. The sensor may measure the impedance by applying a pulse across the surface and measuring the surface voltage or by measuring the strength of the capacitive coupling. The sensor may use other known techniques for measuring impedance, and may compensate for varying ambient conditions such as the moisture in the air or temperature. The haptic effect may be adjusted based on the impedance of a person. For example, a more forceful haptic effect may be applied to an object with a higher impedance and a less forceful effect for one with lower impedance.

The touch control panel 300 may also include a sensor that measures the simulated coefficient of friction. This may be the same sensor as the sensor described above that measures the impedance, or it may be a different sensor. The sensor may measure the simulated coefficient based on a measured pressure that the surface 310 is receiving, such as from an object touching the surface 310, and on the movement of the object at the surface 310. Movement of the object may be measured based on how the pressure at the surface 310 changes over time and over locations on the surface 310. For example, the sensor may calculate a value representing the simulated coefficient of friction based on an acceleration of a user's finger F on the surface 310 and on the pressure that the surface 310 receives from the user's finger F.

The haptic effects may be generated by the actuators 330, 332, 334, the electrostatic device 340, and/or the ultrasonic vibration device 336 one at a time, or can be combined. For example, a voltage may be applied to the conducting layer 342 at a level high enough to both attract the skin of a finger F touching the surface 310 and to stimulate mechanoreceptors within the skin. Simultaneous to this electro-vibrotactile haptic effect, electrostatic forces may be produced on the conducting layer 342 and the insulating layer 344 to create mechanical motion in those layers. The haptic effects may be combined with motions generated by one or a combination of actuators 330, 332, and 334. The devices may work together to simulate the coefficient of friction or texture on the surface of the screen. The actuators may generate vibrations, for example, to also simulate changes in the surface friction or texture.

The haptic effects generated by the haptic output device 160, and the sensors may be controlled by the processer 110 described above. The processor 110 may analyze the impedance, the simulated coefficient of friction, the surface pressure, a rate of movement measured at the surface, and other factors to determine whether there has been a triggering condition for a haptic effect or how forceful a haptic effect should be. In an embodiment, the haptic effects may always be generated and may not depend on whether a touch is sensed by the sensor 154.

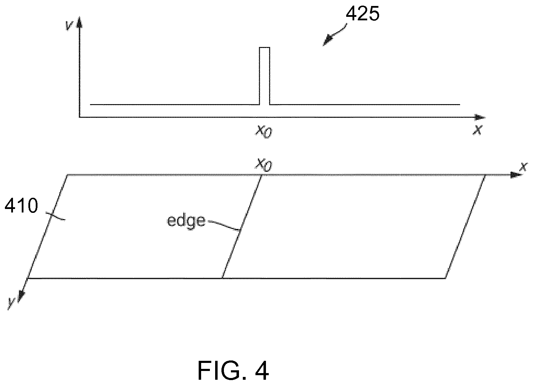

In an embodiment, the haptic output device 160 may be configured to generate a haptic effect that is localized in time or space (e.g., a brief, abrupt pulse) to simulate an edge or detent on the surface 310 of the system 100. For example, Figure 4 illustrates a localized haptic effect provided on a surface 410 that is based on an impulse signal 425. As an object, such as a person's finger, is detected to be at or about to cross x₀ on the surface 410, the haptic effect may be generated to simulate crossing of an edge or detent located at x₀. The localized haptic effect may cease once the object moves away from x₀ or after a predetermined amount of time has passed since the object passed position x₀. For example, a haptic effect may last for 20 msec after the object passes position x₀.

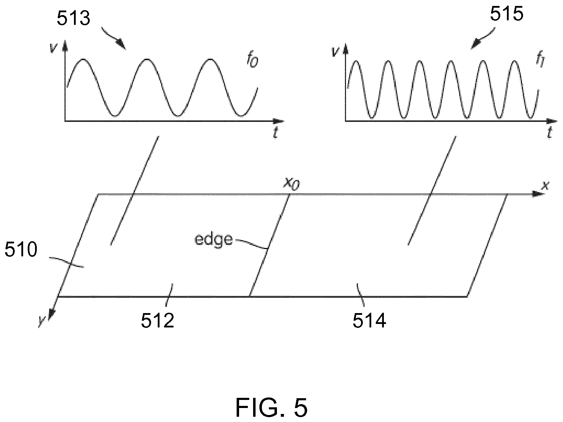

In an embodiment, a haptic effect may be altered on the surface 310 in a discrete manner. For example, as illustrated in Figure 5, a haptic effect may be altered to simulate discrete regions on a surface 510, such as regions 512 and 514. When an object is detected to be touching a first region 512 of the surface 510, a periodic haptic effect based on a first haptic drive signal 513 may be generated. When the object is detected to be touching a second region 514 of the surface 510, a frequency of the periodic haptic effect may be increased by a discrete amount, and the altered periodic haptic effect may be based on a second haptic drive signal 515, which as illustrated in Figure 5 has a greater frequency than the first haptic drive signal 513.

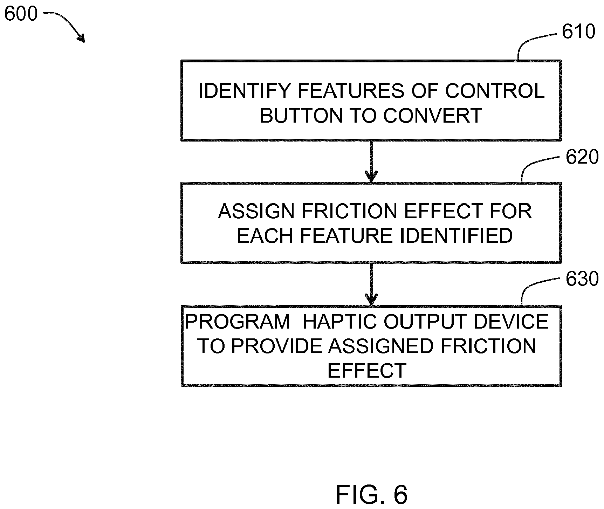

Using the embodiments of the system 100 described above, a method that can be used to convert or adapt common button-oriented touch panel controls into more efficient and pleasant to use friction-augmented controls is provided. Such a method takes advantage of friction feedback described above. As illustrated in Figure 6, a method 600 for converting a control button to an augmented control button in accordance with an embodiment of the invention is provided. At 610, features of a control button to be converted to the augmented control button are identified. At 620, a friction effect for each feature that is identified at 610 is assigned. At 630, a haptic output device, such as the haptic output device 160 described above, is programmed to provide the assigned friction effects for playback on a touch control panel. The processor 110 may execute the programming with the determination module 114, for example. In an embodiment, the entire method 600 may be executed by the processor 110.

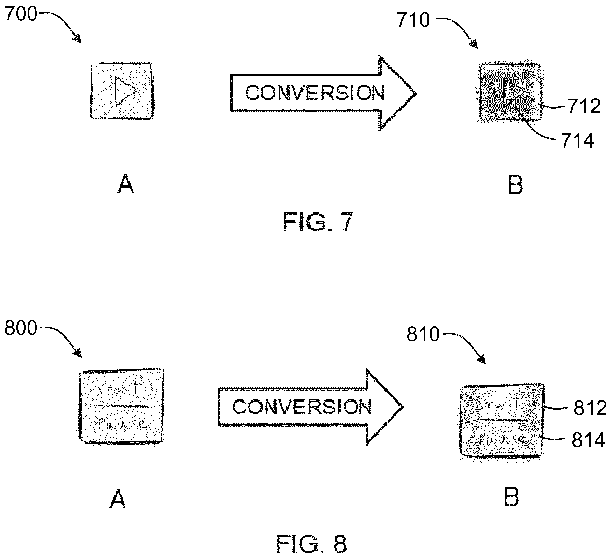

Figure 7A illustrates an embodiment of a control in the form of a button 700 that may retain its control function but be converted to be an augmented button 710, as illustrated in Figure 7B, with a distinct edge 712, such as an edge illustrated in Figure 4 and produced by pulsing the friction output when it is crossed. An area texture 712, such as one of the textures created by the haptic drive signals 513, 515 illustrated in Figure 5, may also be produced by varying the friction output. Such a conversion of the button 700 to the augmented button 710 makes it possible to locate the augmented button 710 by touch. The friction effects of the augmented button 710 may be modified to indicate the state of the button 710, for example, whether the button 710 is accepting input from a user. The friction effects may also be used to indicate the location and state of other types of buttons and controls, such as those described in further detail below.

Figure 8A illustrates an embodiment of a multi-purpose button 800 that supports different functions, depending on the current state of the apparatus that the multi-purpose button 800 is being used to control, may be converted to be an augmented multi-purpose button 810, as illustrated in Figure 8B. The augmented multi-purpose button 810 may be configured to present a different texture 812, 814 depending on the current function being controlled by the button 810. The texture may be associated with visual textures on the labels of the button 810, such as "start" and "pause," as illustrated.

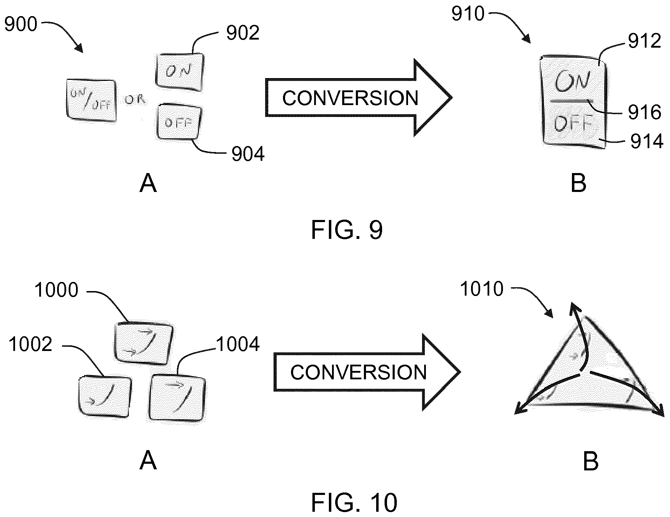

Figure 9A illustrates a toggle button 900 or an equivalent pair of buttons 902, 904 that may be converted to an augmented toggle switch 910, illustrated in Figure 9B, that may be activated by flicking the surface in different directions, e.g., upward or downward, to toggle to one state or the other, represented by a first portion 912 and a second portion 914 in the illustrated embodiment. The augmented toggle switch 910 may be provided with transition effects and different textures in the first portion 912 and the second portion 914, as well as an edge 916 to indicate the center of the toggle switch 910. For example, the progressive activation of the function may be indicated with a texture, and a special effect, such as an impulse, may be generated once the desired activation threshold has been reached.

Figure 10A illustrates a collection of buttons 1000, 1002, 1004 (which in an embodiment may be a single multi-purpose button), which may be converted to a single augmented control area 1010, as illustrated in Figure 10B. The augmented control area 1010 may be configured to activate different functions of the device it is controlling, depending on a directional gesture provided by the user for activation, as indicated by the arrows in Figure 10B. The texture of the surface of the augmented control area 1010 may change as the function of the control is progressively activated, and a different effect, such as an impulse may be output to the user when the desired activation threshold has been reached.

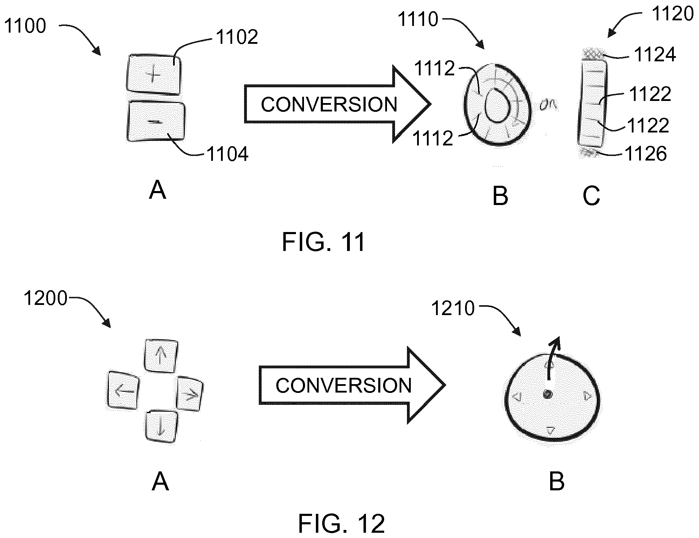

Figure 11A illustrates a pair of incremental buttons 1100, such as a pair of plus and minus buttons 1102, 1104, which may be converted to a rotary control 1110, as illustrated in Figure 11B, that is operated by a continuous sliding gesture. As illustrated, the rotary control 1110 includes detents 1112 provided at specific intervals. Variations in detent intensity or profile as the value changes (e.g., intensity), and a distinct texture or effect as the control's limit is reached, may also be provided to the rotary continuous control 1110. Figure 11C illustrates a linear continuous control 1120 with detents 1122 provided at specific intervals and distinct textures 1124, 1126 at each end of the linear continuous control 1120 that provide indications when limits are reached. In either of the embodiments illustrated in Figures 11B and 11C, the detents or background texture may change as the parameter varies, for example, an increase in intensity. A distinct texture or friction effect may also be felt as the limit of the control is reached.

Figure 12A illustrates a group of arrow buttons 1200 that may be converted to an augmented joystick-like control 1210 that can be pushed or dragged in different directions by a gesture represented by an arrow in Figure 12B, with friction increasing as it is displaced from the center. Friction effects may be provided to indicate the progressive activation of the control 1210 and also the direction of the activation. A special friction effect or texture may be provided if the range of the control is exceeded.

Such conversions of control features of a touch control panel may provide the following advantages, and friction feedback may be used in this context for different purposes. For example, in an embodiment for continuous control, friction feedback may make it possible to use continuous control of parameters with sliders and dials, which are more pleasant to use than repeatedly pressing a single button. Detents may, for example, be felt as a setting is modified with a rotary or linear slider, and a boundary effect may be produced when the limit of the setting is reached. In an embodiment, controls may be textured and their boundaries highlighted such that they can be located non-visually, or with less reliance on vision. As a user slides a finger against the surface, he/she may feel a smooth surface, then a bump indicating the edge of a button, and finally a rough texture indicating the surface of the button.

In embodiment in which controls have two or more states, such as discrete volume levels, friction feedback may be used to indicate the transition between such states. For example, a strong detent may be produced as a switch is toggled between two states. In an embodiment, texture and other friction effects may indicate the current state or mode of a control, for example whether it is on or off, sensitive or not. For example, a button on a medical equipment panel may have a different texture when the system believes its use may be dangerous based on sensor readings. In an embodiment, friction feedback may be used to indicate when the limit of travel of a control has been reached, such as the end of travel of a slider. For example, a strong texture or an edge effect may give the impression that the sliding of the control has changed drastically, and that the limit has been reached.

In an embodiment, the feel of a control may be modified based on user preferences, for example to feel like plastic versus wood. A driver of a vehicle, for example, may change the feel of a capacitive button to match his/her leather seats instead of feeling metallic.

In order to convert the buttons and other control devices to augmented buttons and control devices as described above, the hardware of a touch control panel may be modified to integrate, for example, a friction display. Friction displays currently use one of two technologies. First, electrostatic friction (ESF) uses a time-varying electric field to increase a surface's coefficient of friction, as described above. This technology uses an electrode at the contact surface in order to apply the electric field, and a dielectric layer that isolates the user's finger electrically. Second, ultrasonic vibrations (USV) use highfrequency vibrations that are not felt as vibrations but that reduce the surface's coefficient of friction. To generate the ultrasonic vibrations, piezoelectric actuators may be connected to or create a portion of the contact surface. The surface should also be suspended at specific locations so that the vibrations are not damped. Using either type of friction display, different effects may be produced depending on the availability of touch sensors integrated into the display.

For example, in the absence of a touch sensor, the friction displays may be limited to time-varying effects that can create a variety of textures. In some embodiments, a touch sensor may be able to detect that the user's finger is in contact with an area of the touch panel, such as a button. In this case, friction textures may once again be limited to temporal patterns but may be turned off outside of button locations, or varied depending on the button touched. Special effects may also be produced as the finger enters or leaves certain areas.

In other embodiments, a touch sensor using pressure or capacitance, as described above, may be able to detect the location of the touch input more precisely, which may enable the use of spatial rendering algorithms. For example, electrostatic friction can create the illusion of a spatial grating by turning its output on and off as a function of displacement along the length of a button. Such spatial gratings are described in more detail in United States Patent Application Serial No. 13/782,771, filed March 1, 2013, entitled "Method and Apparatus for Providing Haptic Cues for Guidance and Alignment with Electrostatic Friction," and published as United States Patent Application Publication No. 2014/0139448. Location sensors may also enable the use of detents or other spatial effects when a continuous control, such as a rotary dial or linear slider, is used.

In embodiments that generate electrostatic friction or ultrasonic vibrations, driving electronics are used to produce driving signals. In many embodiments, an embedded microcontroller, such as the processor 110 described above, may be used to interpret a user's input and generate appropriate driving signals. Embodiments of the system 100 may be completely independent or may accept commands from other components of the apparatus that the touch panel controls. For example, a medical device's microcontroller may communicate with the processor 110 of the system 100 to change the state of the different buttons and controls.

As discussed above, devices that generate electrostatic friction include a conductive layer covered with an insulating layer. In some cases, the ESF layer may need to be transparent in order to expose a screen or other visual elements. The following configurations for friction displays using electrostatic friction and ultrasonic vibrations are exemplary.

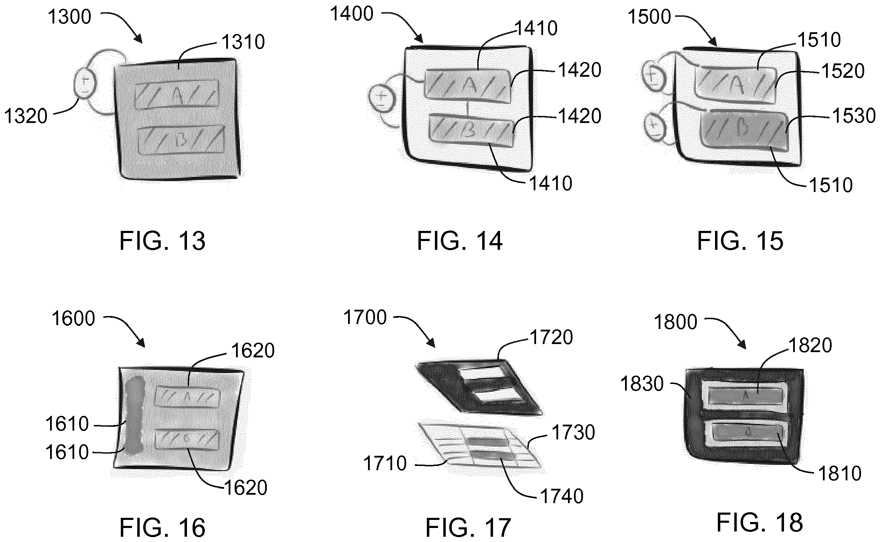

As illustrated in Figure 13, the entire touch control panel 1300 may be covered with an electrostatic friction layer 1310 that is connected to driving circuitry 1320. A touch sensor, such as the sensor 154 described above, may be used to locate the touch and determine whether the user is touching a control or the background.

Figure 14 illustrates an example of a touch control panel 1400 in which an electrostatic friction layer 1410 only covers certain locations of the touch control panel 1400 that need to produce programmable haptic feedback. For example, the electrode of the electrostatic friction layer may be present only at the location of buttons and controls 1420 of the touch control panel 1400. In an embodiment of the present invention, a similar effect may be obtained by varying the thickness of the insulation layer 344 described above to break the electrostatic friction effect at certain locations. In both cases, sensing a touch may not be needed, because textures would be naturally limited to the controls and buttons 1420 where the electrostatic friction layer 1410 is active.

Figure 15 illustrates an example of a touch control panel 1500 in which electrodes of an electrostatic friction layer 1510 cover only certain areas of the touch control panel 1500, but are driven by different signals and therefore produce independent haptic feedback.

This would enable the use of different textures on different buttons 1520, 1530 without the need for sensing a touch by the user.

Similar examples are also possible with friction displays that generate ultrasonic vibrations. For example, Figure 16 illustrates an example of a touch control panel 1600 in which the entire panel 1600 is actuated and moves as one. Such an example uses actuators 1610 that are ideally placed underneath the entire surface of the touch control panel 1600, or at least under the virtual controls 1620. Depending on the size of the touch control panel 1600, it may also be possible to actuate the panel 1600 from the edges, as illustrated.

Figure 17 illustrates an embodiment of a touch control panel 1700 that provides partial ultrasonic vibration coverage by having a vibrating component 1710 within a non-vibrating frame 1720. The top layer, for example, may consist of the non-vibrating, rigid frame with a flexible layer 1730 at the location of the buttons and controls 1740, where the vibrating component 1710 would be embedded. The flexible layer 1730 and the vibrating component 1710 may be arranged such that the vibrating component 1710 at the location of the buttons and controls 1740 may be directly contacted by a user though openings in the non-vibrating frame 1720.

Figure 18 illustrates an embodiment of a touch control panel 1800 that provides independent coverage. In this embodiment, each button and control 1810, 1820 may be individually actuated and suspended within a rigid frame 1830.

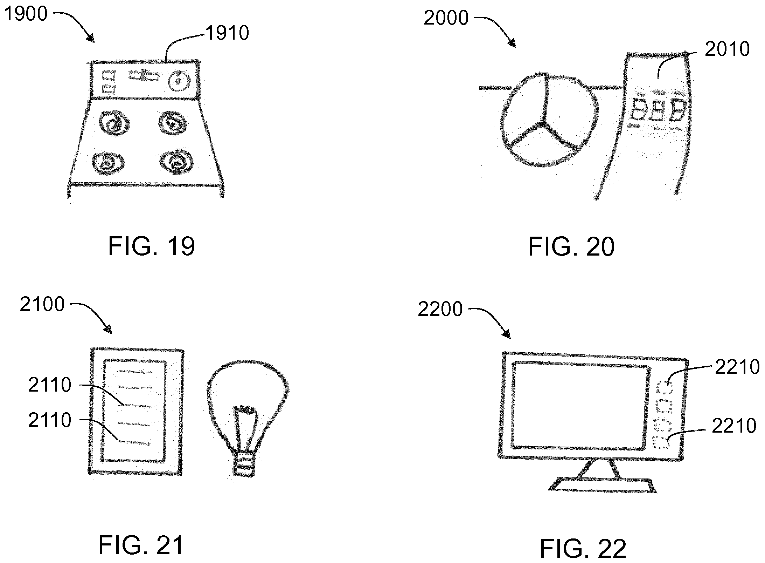

In accordance with embodiments of the invention, friction feedback may be used in a variety of applications in which touch control panels are or may be used, such as home appliances, car dashboards, consumer electronic products (e.g., computer monitors), flat light dimmers, medical equipment, industrial control panels, or even on the unused space on the enclosure of certain devices such as tablets and smartphones. Figures 19-26 illustrate non-limiting examples of implementations of embodiments of the invention as described above.

For example, Figure 19 illustrates a kitchen stove appliance 1900 that includes a friction-augmented touch control panel 1910 in accordance with embodiments of the the smartphone 2400, in accordance with embodiments of the invention described above.

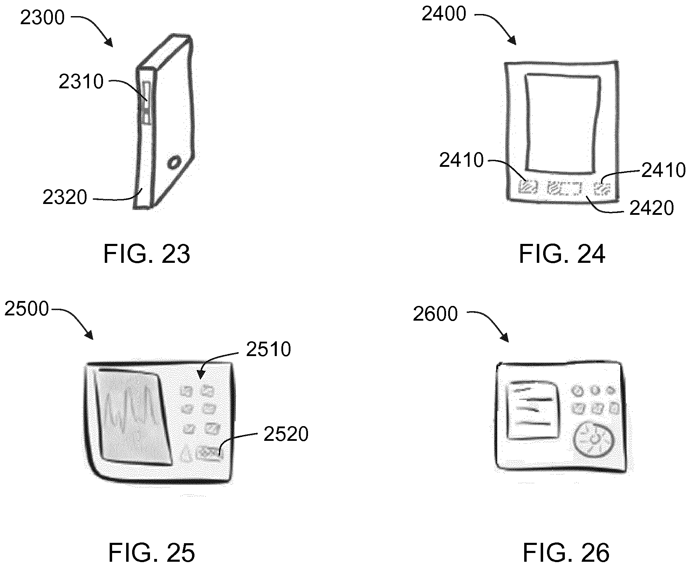

Figure 25 illustrates an embodiment of a monitor 2500 of medical equipment that includes a touch panel 2510 so that the monitor 2500 can be more easily sanitized. The touch panel 2510 is augmented in accordance with embodiments of the invention described above. In an embodiment, at least one button 2520 that may only be activated by certain medical personal may be provided with a very different texture to warn users of the monitor that the button 2520 can only be actuated by authorized medical personnel.

Figure 26 illustrates an embodiment of a touch panel 2600 for an industrial machine that is configured to resist dust, fumes and other contaminants. The touch panel 2600 is augmented in accordance with embodiments of the invention to provide haptic feedback, which may make the touch panel 2600 easier and safer to use than a touch panel that is not augmented in accordance with embodiments of the invention.

Augmenting touch control panels with haptic feedback in accordance with embodiments of the invention may restore some of the benefits of physical controls, while retaining the advantages of touch panels. Friction feedback may make certain devices more attractive to consumers, and may enable the use of touch panels for some devices in which the properties of physical controls are more desirable.

## Claims

1. A system (100) comprising:
a touch control panel (300; 1300; 1400; 1500; 1600; 1700; 1800; 1910; 2510; 2600) configured to receive an input corresponding to an augmented virtual control button (710; 810; 910; 1010; 1210; 2010; 2210; 2310; 2520) displayed on a display (152), the augmented virtual control button being converted from a virtual control button (700; 800; 900; 902; 904; 1000; 1002; 1004; 1100; 1102; 1104) comprising a control function, wherein the augmented virtual control button retains the control function of the virtual control button;
a controller (110) in signal communication with the touch control panel and configured to control at least one operational setting of a powered apparatus; and
a haptic output device (160; 330, 332, 334; 340) in signal communication with the controller and configured to output a friction effect indicating a state of at least one of the augmented virtual control button as the user provides the input corresponding to the augmented virtual control button, wherein the apparatus includes a conducting layer having at least one electrode and an insulating layer, and the thickness of the insulating layer varies to break an electrostatic friction effect at certain locations whilst maintaining an active electrostatic friction layer at the location of the virtual button.

2. The system according to claim 1, wherein the haptic output device comprises a piezoelectric actuator connected to a surface of the touch control panel.

3. The system according to claim 2, wherein the haptic output device comprises a flexible layer connected to the surface of the touch control panel and coinciding with the augmented control button, the piezoelectric actuator being embedded in the flexible layer, and wherein a rigid frame having an opening coinciding with the augmented control button overlays the flexible layer.

4. The system according to claim 1, wherein the powered apparatus is a kitchen appliance.

5. The system according to claim 1, wherein the powered apparatus is a light fixture.

6. The system according to claim 1, wherein the powered apparatus is medical equipment.

7. The system according to claim 1, wherein the powered apparatus is an industrial machine.

8. The system according to claim 1, wherein the powered apparatus is a smartphone.

9. The system according to claim 1, wherein the powered apparatus is located in a vehicle.

10. The system according to claim 1, wherein the powered apparatus is a computer monitor.

11. A method for converting a virtual control button (700; 800; 900; 902; 904; 1000; 1002; 1004; 1100; 1102; 1104) to an augmented virtual control button (710; 810; 910; 1010; 1210; 2010; 2210; 2310; 2520), the method comprising:
identifying a feature of the virtual control button to be converted to the augmented virtual control button to be simulated as a physical surface feature;
identifying a control function of the virtual control button to be retained by the augmented virtual control button;
assigning a friction effect to the feature in the virtual augmented control button; and
outputting, by a haptic output device (160; 330, 332, 334; 340), the friction effect for playback on a touch control panel, the friction effect indicating a state of the augmented virtual control button as the user provides an input corresponding to the augmented virtual control button;
wherein the touch control panel comprises a conducting layer having at least one electrode and an insulating layer, and that the thickness of the insulating layer varies to break an electrostatic friction effect at certain locations whilst maintaining an active electrostatic friction layer at the location of the virtual button.

12. The method according to claim 11, wherein the feature corresponds to an edge of the control button.

13. The method according to claim 11, wherein the feature corresponds to a texture of the control button.

## Patentansprüche

1. System (100), umfassend:
eine Berührungssteuerungstafel (300; 1300; 1400; 1500; 1600; 1700; 1800; 1910; 2510; 2600), die dazu ausgelegt ist, eine Eingabe zu empfangen, die einer erweiterten virtuellen Steuertaste (710; 810; 910; 1010; 1210; 2010; 2210; 2310; 2520) entspricht, die auf einem Display (152) angezeigt wird, wobei die erweiterte virtuelle Steuertaste von einer eine Steuerfunktion umfassenden virtuellen Steuertaste (700; 800; 900; 902; 904; 1000; 2002; 2004; 1100; 1102; 1104) umgewandelt wird, wobei die erweiterte virtuelle Steuertaste die Steuerfunktion der virtuellen Steuertaste beibehält;
einen Controller (110), der in Signalverbindung mit der Berührungssteuerungstafel ist und dazu konfiguriert ist, mindestens eine Betriebseinstellung eines angetriebenen Geräts zu steuern; und
ein haptisches Ausgabegerät (160; 330; 332; 334; 340), das in Signalverbindung mit dem Controller ist und dazu konfiguriert ist, einen Reibungseffekt auszugeben, der einen Zustand von mindestens einer der erweiterten virtuellen Steuertaste angibt, wenn der Benutzer die der erweiterten virtuellen Steuertaste entsprechende Eingabe bereitstellt, wobei die Vorrichtung eine leitende Schicht enthält, die mindestens eine Elektrode und eine Isolierschicht aufweist, und die Dicke der Isolierschicht unterschiedlich ist, um einen elektrostatischen Reibungseffekt an bestimmten Positionen zu brechen, während eine aktive elektrostatische Reibungsschicht an der Position der virtuellen Schaltfläche aufrecht erhalten bleibt.

2. System nach Anspruch 1, wobei das haptische Ausgabegerät einen piezoelektrischen Aktor umfasst, der an einer Oberfläche der Berührungssteuerungstafel angeschlossen ist.

3. System nach Anspruch 2, wobei das haptische Ausgabegerät eine flexible Schicht umfasst, die mit der Oberfläche der Berührungssteuerungstafel verbunden ist und die mit der erweiterten Steuertaste übereinstimmt, wobei der piezoelektrische Aktor in der flexiblen Schicht eingebettet ist, und wobei ein starrer Rahmen, der eine mit der erweiterten Steuertaste übereinstimmende Öffnung aufweist, die flexible Schicht überlagert.

4. System nach Anspruch 1, wobei das angetriebene Gerät ein Küchengerät ist.

5. System nach Anspruch 1, wobei das angetriebene Gerät ein Beleuchtungskörper ist.

6. System nach Anspruch 1, wobei das angetriebene Gerät ein medizinisches Gerät ist.

7. System nach Anspruch 1, wobei das angetriebene Gerät eine Industriemaschine ist.

8. System nach Anspruch 1, wobei das angetriebene Gerät ein Smartphone ist.

9. System nach Anspruch 1, wobei sich das angetriebene Gerät in einem Fahrzeug befindet.

10. System nach Anspruch 1, wobei das angetriebene Gerät ein Computerbildschirm ist.

11. Verfahren zur Umwandlung einer virtuellen Steuertaste (700; 800; 900; 902; 904; 1000; 1002; 1004; 1100; 1102; 1104) in eine erweiterte virtuelle Steuertaste (710; 810; 910; 1010; 1210; 2010; 2210; 2310; 2520), wobei das Verfahren umfasst:
Identifizieren eines Elements der in die erweiterte virtuelle Steuertaste umzuwandelnden virtuellen Steuertaste zur Simulation als physisches Oberflächenelement;
Identifizieren einer Steuerfunktion der virtuellen Steuertaste, die von der erweiterten virtuellen Steuertaste beibehalten werden soll;
Zuweisen eines Reibungseffekts zum Element in der virtuellen erweiterten Steuertaste; und
Ausgeben - durch ein haptisches Ausgabegerät (160; 330; 332; 334; 340) - des Reibungseffekts zur Wiedergabe auf einer Berührungssteuerungstafel, wobei der Reibungseffekt einen Zustand der erweiterten virtuellen Steuertaste angibt, wenn der Benutzer eine Eingabe bereitstellt, die der erweiterten virtuellen Steuertaste entspricht;
wobei die Berührungssteuerungstafel eine leitende Schicht enthält, die mindestens eine Elektrode und eine Isolierschicht aufweist, und die Dicke der Isolierschicht unterschiedlich ist, um einen elektrostatischen Reibungseffekt an bestimmten Positionen zu brechen, während eine aktive elektrostatische Reibungsschicht an der Position der virtuellen Taste aufrecht erhalten bleibt.

12. Verfahren nach Anspruch 11, wobei das Element einer Kante der Steuertaste entspricht.

13. Verfahren nach Anspruch 11, wobei das Element einer Struktur der Steuertaste entspricht.

## Revendications

1. Système (100) comprenant :
un panneau de commande tactile (300 ; 1300 ; 1400 ; 1500 ; 1600 ; 1700 ; 1800 ; 1910 ; 2510 ; 2600) configuré pour recevoir une entrée correspondant à un bouton de commande virtuel augmenté (710 ; 810 ; 910 ; 1010 ; 1210 ; 2010 ; 2210 ; 2310 ; 2520) affiché sur un dispositif d'affichage (152), le bouton de commande virtuel augmenté étant converti à partir d'un bouton de commande virtuel (700 ; 800 ; 900 ; 902 ; 904 ; 1000 ; 1002 ; 1004 ; 1100 ; 1102 ; 1104) comprenant une fonction de commande, le bouton de commande virtuel augmenté conservant la fonction de commande du bouton de commande virtuel ;
un dispositif de commande (110) en communication de signaux avec le panneau de commande tactile et configuré pour commander au moins un paramètre fonctionnel d'un appareil alimenté en puissance ; et
un dispositif de sortie haptique (160 ; 330, 332, 334 ; 340) en communication de signaux avec le dispositif de commande et configuré pour délivrer un effet de friction indiquant un état d'au moins l'un du bouton de commande virtuel augmenté lorsque l'utilisateur fournit l'entrée correspondant au bouton de commande virtuel augmenté, l'appareil comprenant une couche conductrice ayant au moins une électrode et une couche isolante, et l'épaisseur de la couche isolante variant pour rompre un effet de friction électrostatique à certains emplacements tout en maintenant une couche de friction électrostatique active à l'emplacement du bouton virtuel.

2. Système selon la revendication 1, dans lequel le dispositif de sortie haptique comprend un actionneur piézoélectrique relié à une surface du panneau de commande tactile.

3. Système selon la revendication 2, dans lequel le dispositif de sortie haptique comprend une couche souple reliée à la surface du panneau de commande tactile et coïncidant avec le bouton de commande augmenté, l'actionneur piézoélectrique étant incorporé dans la couche souple, et un cadre rigide ayant une ouverture coïncidant avec le bouton de commande augmenté chevauchant la couche souple.

4. Système selon la revendication 1, dans lequel l'appareil alimenté en puissance est un appareil de cuisine.

5. Système selon la revendication 1, dans lequel l'appareil alimenté en puissance est un luminaire.

6. Système selon la revendication 1, dans lequel l'appareil alimenté en puissance est un équipement médical.

7. Système selon la revendication 1, dans lequel l'appareil alimenté en puissance est une machine industrielle.

8. Système selon la revendication 1, dans lequel l'appareil alimenté en puissance est un téléphone intelligent.

9. Système selon la revendication 1, dans lequel l'appareil alimenté en puissance est situé dans un véhicule.

10. Système selon la revendication 1, dans lequel l'appareil alimenté en puissance est un moniteur d'ordinateur.

11. Procédé pour convertir un bouton de commande virtuel (700 ; 800 ; 900 ; 902 ; 904 ; 1000 ; 1002 ; 1004 ; 1100 ; 1102 ; 1104) en un bouton de commande virtuel augmenté (710 ; 810 ; 910 ; 1010 ; 1210 ; 2010 ; 2210 ; 2310 ; 2520), le procédé comprenant :
identifier une caractéristique du bouton de commande virtuel à convertir en bouton de commande virtuel augmenté à simuler en tant que caractéristique de surface physique ;
identifier une fonction de commande du bouton de commande virtuel devant être conservée par le bouton de commande virtuel augmenté ;
affecter un effet de friction à la caractéristique dans le bouton de commande augmenté virtuel ; et
délivrer, par un dispositif de sortie haptique (160 ; 330, 332, 334 ; 340), l'effet de friction pour une lecture sur un panneau de commande tactile, l'effet de friction indiquant un état du bouton de commande virtuel augmenté lorsque l'utilisateur fournit une entrée correspondant au bouton de commande virtuel augmenté ;
le panneau de commande tactile comprenant une couche conductrice ayant au moins une électrode et une couche isolante, et l'épaisseur de la couche isolante variant pour rompre un effet de friction électrostatique à certains emplacements tout en maintenant une couche de friction électrostatique active à l'emplacement du bouton virtuel.

12. Procédé selon la revendication 1, dans lequel la caractéristique correspond à un bord du bouton de commande.

13. Procédé selon la revendication 11, dans lequel la caractéristique correspond à une texture du bouton de commande.
